# EUROPEAN PATENT APPLICATION

(11) **EP 3 340 188 A1**
(43) Date of publication of application: **27.06.2018**
(21) Application number: 16837182.1
(22) Date of filing: 19.08.2016
(51) Int. Cl.: G06T 19/00

(54) **INFORMATION PROCESSING DEVICE, INFORMATION PROCESSING METHOD, AND PROGRAM**

(30) Priority: 20.08.2015 US 201562207492 P
(71) Applicant: Sony Corporation, Tokyo 108-0075 (JP)
(72) Inventor: KASAHARA, Shunichi, Tokyo 141-0022 (JP)
(74) Representative: MFG Patentanwälte Meyer-Wildhagen Meggle-Freund Gerhard PartG mbB
(86) International application number: PCT/JP2016/074263
(87) International publication number: WO 2017/030193

(57) **Abstract**

[Object] To provide an information processing apparatus, an information processing method, and a program.

[Solution] Provided is an information processing apparatus including: a display control unit configured to control display such that a user is able to visually recognize, at a same time, a real object and a virtual object, the virtual object being obtained through search based on sensed data associated with the real object at a first time point and sensed data associated with the real object at a second time point.

## Description

### Technical Field

The present disclosure relates to an information processing apparatus, an information processing method, and a program.

### Background Art

In recent years, a see-through-type head mounted display (HMD) with which an object in real space (hereinafter, referred to as a real object) and a virtual object (hereinafter, referred to as a virtual object) can be visually recognized at the same time has been put to practical use (for example, Patent Literature 1). The see-through-type HMD as described above is used in a technical field such as, for example, an augmented reality (AR) technique of augmenting real space perceived by a person and a mixed reality (MR) technique of mixing information of real space in virtual space.

### Citation List

### Patent Literature

Patent Literature 1: JP 2015-149634A

### Disclosure of Invention

### Technical Problem

In the technical field as described above, it is desired to realize more varieties of display in accordance with real-time variation of a real object.

### Solution to Problem

According to the present disclosure, there is provided an information processing apparatus including: a display control unit configured to control display such that a user is able to visually recognize, at a same time, a real object and a virtual object, the virtual object being obtained through search based on sensed data associated with the real object at a first time point and sensed data associated with the real object at a second time point.

Further, according to the present disclosure, there is provided an information processing method including: controlling display by a processor such that a user is able to visually recognize, at a same time, a real object and a virtual object, the virtual object being obtained through search based on sensed data associated with the real object at a first time point and sensed data associated with the real object at a second time point.

Further, according to the present disclosure, there is provided a program causing a computer to realize a function of controlling display such that a user is able to visually recognize, at a same time, a real object and a virtual object, the virtual object being obtained through search based on sensed data associated with the real object at a first time point and sensed data associated with the real object at a second time point.

### Advantageous Effects of Invention

As described above, according to the present disclosure, it is possible to realize more varieties of display in accordance with real-time variation of a real object.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram for explaining outline of an information processing system according to an embodiment of the present disclosure.
[FIG. 2] FIG. 2 is an explanatory diagram for explaining a configuration of a display system 1 according to the embodiment.
[FIG. 3] FIG. 3 is a block diagram illustrating a configuration example of a display apparatus 10 according to the embodiment.
[FIG. 4] FIG. 4 is a conceptual diagram illustrating an example of a field of view of a user who wears the display apparatus 10 according to the embodiment.
[FIG. 5] FIG. 5 is a diagram illustrating an example of the field of view of the user who wears the display apparatus 10 according to the embodiment.
[FIG. 6] FIG. 6 is a diagram illustrating another example of the field of view of the user who wears the display apparatus 10 according to the embodiment.
[FIG. 7] FIG. 7 is a diagram illustrating another example of the field of view of the user who wears the display apparatus 10 according to the embodiment.
[FIG. 8] FIG. 8 is a block diagram illustrating a configuration example of a server 2 according to the embodiment.
[FIG. 9] FIG. 9 is a sequence diagram illustrating an operation example of the information processing system according to the embodiment.
[FIG. 10] FIG. 10 is a diagram illustrating an example of a field of view of the user in specific example 1 of display control according to the embodiment.
[FIG. 11] FIG. 11 is a diagram illustrating an example of a field of view of the user in specific example 2 of display control according to the embodiment.
[FIG. 12] FIG. 12 is a diagram illustrating an example of a field of view of the user in specific example 2 of display control according to the embodiment.
[FIG. 13] FIG. 13 is a diagram illustrating an example of a field of view of the user in specific example 3 of display control according to the embodiment.
[FIG. 14] FIG. 14 is a diagram illustrating an example of a field of view of the user in specific example 4 of display control according to the embodiment.
[FIG. 15] FIG. 15 is an explanatory diagram illustrating a hardware configuration example.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
<<1. Outline>>
<<2. Configuration>>
<2-1. Display apparatus>
<2-2. Sever>
<<3. Operation example>>
<<4. Specific examples of display control>>
<<5. Modified examples>>
<<6. Hardware configuration example>>
<<7. Conclusion>>

### <<1. Outline>>

First, outline of an information processing system according to an embodiment of the present disclosure will be described.

The information processing system according to the present embodiment sequentially searches a database of data (image data, motion data and point cloud data) which has already been recorded on the basis of sensed data (such as image data, motion data and point cloud data) obtained by sensing (capturing) motion of the body of a user in real time.

Further, the information processing system according to the present embodiment presents a virtual object (virtual graphic) to the user (displays an augmented reality (AR) image by utilizing, for example, a head mounted display or a head-up display) on the basis of a search result. Further, the information processing system according to the present embodiment may control expression of a virtual object or animation display in accordance with a state of sequential search.

Further, the information processing system according to the present embodiment may analyze detected information (sensed data such as three-dimensional measured data and video data) of current space. The information processing system according to the present embodiment may change a reproduction position (a start position and an end position), reproduction speed, a display method and behavior of a time-series virtual object (three-dimensional data) acquired by searching the database on the basis of the analysis result.

Note that the detected information (sensed data) of current space (real space) may be information sensed (captured) at a point of view of a first person which is substantially the same as a field of view of the user or may be information sensed (captured) at a point of view of a third person.

Further, data to be captured (sensed data) and data to be displayed (a virtual object) may be three-dimensional data including estimated model information of a bone structure, volumetric data estimated from an image, point cloud data, or the like. Further, recorded data may be static three-dimensional data or may be three-dimensional data which changes with time.

Further, as a display apparatus of the virtual object, for example, a head mounted display, a see-through-type head mounted display, a head-up display, or the like, can be used.

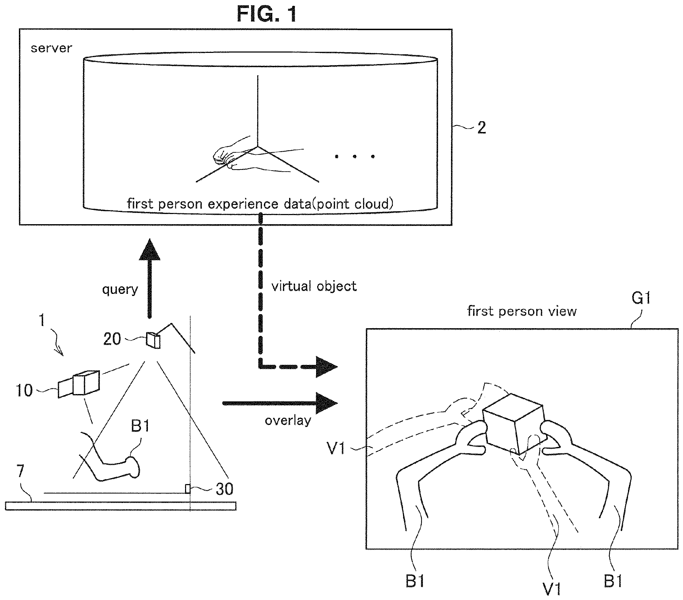

An example of such an information processing system will be described with reference to FIG. 1. FIG. 1 is an explanatory diagram for explaining outline of the information processing system according to an embodiment of the present disclosure. As illustrated in FIG. 1, the information processing system according to the present embodiment includes a display system 1 and a server 2.

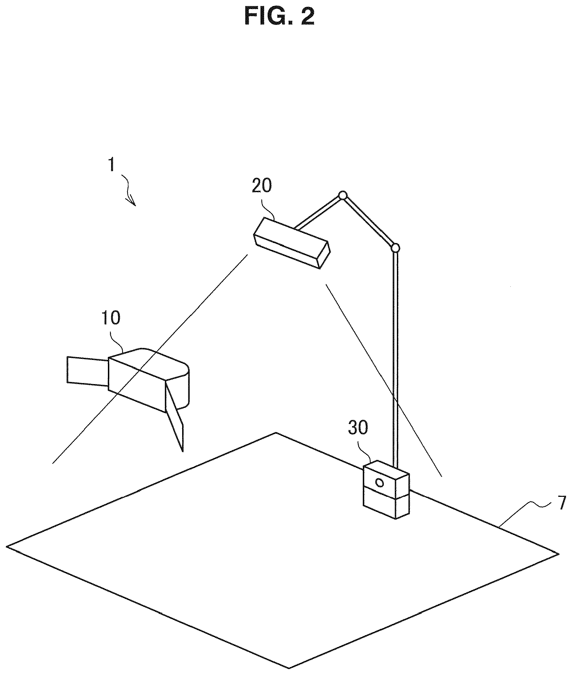

FIG. 2 is an explanatory diagram for explaining a configuration of the display system 1. Note that FIG. 2 is a view of the display system 1 illustrated in FIG. 1 seen from a different point of view. As illustrated in FIGS. 1 and 2, the display system 1 includes a display apparatus 10, a real space sensor 20 and a head tracking sensor 30.

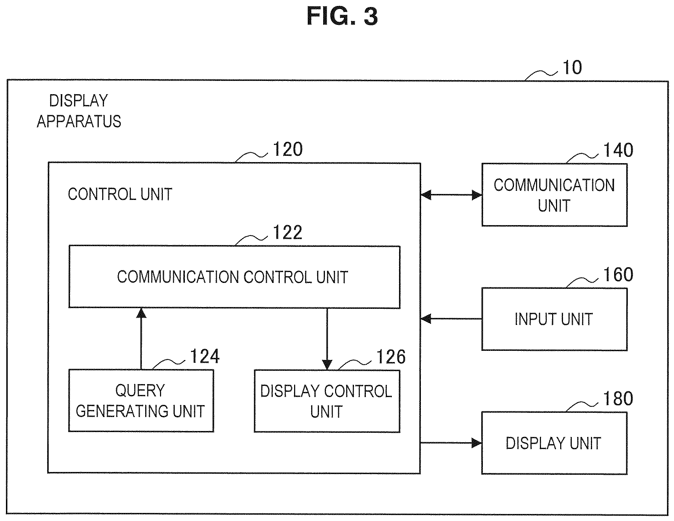

The display apparatus 10, which is, for example, a see-through-type HMD, can allow the user to visually recognize a virtual object and a real object at the same time. Note that a configuration example of the display apparatus 10 will be described later with reference to FIG. 3.

The real space sensor 20 senses information of real space in real time and acquires sensed data associated with a real object. The real object may be, for example, the body of the user, an object grasped by the user, or the like. For example, the real space sensor 20 may be a depth sensor such as Kinect (registered trademark), in which case, the sensed data may be three-dimensional data including point cloud data. In an example illustrated in FIG. 1, the real space sensor 20 senses the body B1 (an example of the real object) of the user who works on a table 7 to acquire sensed data (point cloud data).

The head tracking sensor 30 is a sensor for sensing a head position and head posture of the user who wears the display apparatus 10. The display apparatus 10 may perform display as will be described later using sensing results of the head position and the head posture.

The display apparatus 10, the real space sensor 20 and the head tracking sensor 30 included in the above-described display system 1 may be connected to one another through wired communication or wireless communication. Further, the display system 1 and the server 2 are also connected to each other through wired communication or wireless communication.

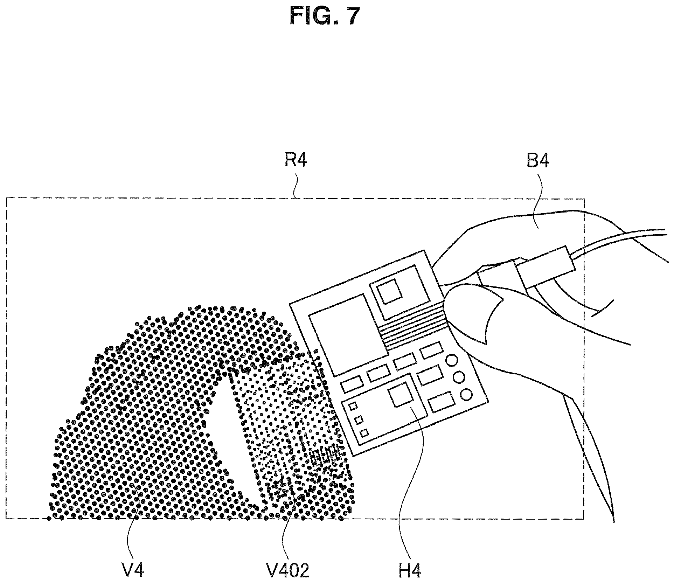

The server 2 has a database of first person experience data (point cloud data) which has already been recorded. The server 2 sequentially receives search queries including sensed data from the display system 1, sequentially searches the database using the search queries, and provides a virtual object to the display system 1 as a search result. The virtual object provided to the display system 1 as the search result may be, for example, a virtual object associated with sensed data which is similar to sensed data associated with a real object and which has already been recorded. Note that a configuration example of the server 2 will be described later with reference to FIG. 7.

The display system 1 which receives the virtual object displays the virtual object at the display apparatus 10 with the virtual object overlaid in real space so as to allow the user to visually recognize the virtual object at the same time as the real object. For example, in the example illustrated in FIG. 1, a field of view G1 of the user at a point of view of the first person includes the body B1 of the user and a virtual object V1, so that the user can visually recognize the body B1 which is the real object and the virtual object V1 at the same time.

As described above, according to the information processing system according to an embodiment of the present disclosure, it is possible to realize more varieties of display in accordance with real-time variation of the real object through sequential search using sensed data associated with the real object acquired in real time. For example, the information processing system according to the present embodiment can also assist work of the user by presenting a virtual object which serves as a model of work of the user to the user who is working. A configuration of the present embodiment having such an effect will be described in detail below.

### «2. Configuration»

The outline of the information processing system according to the present embodiment has been described above. Subsequently, configuration examples of the display apparatus 10 and the server 2 included in the information processing system according to the present embodiment will be sequentially described in detail.

### <2-1. Display apparatus>

FIG. 3 is a block diagram illustrating a configuration example of the display apparatus 10 according to the present embodiment. As illustrated in FIG. 3, the display apparatus 10 is an information processing apparatus which includes a control unit 120, a communication unit 140, an input unit 160 and a display unit 180. The display apparatus 10 according to the present embodiment is, for example, a see-through-type HMD as described with reference to FIGS. 1 and 2.

The control unit 120 controls each component of the display apparatus 10. Further, as illustrated in FIG. 3, the control unit 120 also functions as a communication control unit 122, a query generating unit 124 and a display control unit 126.

The communication control unit 122 controls communication by the communication unit 140. For example, the communication control unit 122 may control the communication unit 140 to receive sensed data (for example, point cloud data) associated with the real object from the real space sensor 20. Further, the communication control unit 122 may control the communication unit 140 to receive sensing results of the head position and the head posture of the user from the head tracking sensor 30. Still further, the communication control unit 122 may control the communication unit 140 to transmit a search query generated by the query generating unit 124 which will be described later, to the server 2 and receive a search result including a virtual object from the server 2.

The query generating unit 124 generates a search query to be used by the server 2 to search for a virtual object. The search queries generated by the query generating unit 124 are sequentially transmitted to the server 2. The search query generated by the query generating unit 124 includes, for example, sensed data associated with the real object received from the real space sensor 20.

Further, the search query generated by the query generating unit 124 may include prior information such as name of work and action to be performed by the user. The prior information may be text data such as "cut an avocado", "fillet a fish" and "check an engine room", and, for example, may be provided through user input via the input unit 160 which will be described later. Further, candidates for possible prior information may be displayed at the display unit 180, and prior information may be selected from a plurality of candidates for prior information through user input. According to such a configuration, search accuracy at the server 2 improves.

The display control unit 126 controls display of the display unit 180 which will be described later. For example, the display control unit 126 controls display of the display unit 180 such that the user can visually recognize the virtual object obtained through search by the server 2 at the same time as the real object. Here, the virtual object is a virtual object obtained through search based on sensed data associated with the real object at a first time point and sensed data associated with the real object at a second time point.

The display control unit 126 may control a display position of the virtual object on the basis of the sensing results of the head position and the head posture of the user received from the head tracking sensor 30. For example, the display position of the virtual object may be controlled such that relationship between the head position and the head posture when the virtual object is recorded, and the virtual object becomes similar to relationship between the current head position and the current head posture of the user, and the virtual object.

Further, the display control unit 126 may cause the virtual object to be displayed with spatial synchronization being achieved with the real object.

For example, the spatial synchronization may include position adjustment (position synchronization) between the real object and the virtual object. The position adjustment may be performed in the case where, for example, it is determined that a state of the displayed virtual object is the same as a current state of the real object. Comparison between the state of the virtual object and the current state of the real object may be performed in time series using the sensed data of the real object or may be performed at each time.

Further, the spatial synchronization may include scaling synchronization which matches display size of the virtual object with size of the real object. For example, in the case where the real object is the body of the user such as the hand and the arm of the user and there is a difference between the size of the body of the user and the size of the body associated with the virtual object, scaling synchronization may be performed which changes the display size of the virtual object on the basis of the size of the body of the user.

Further, the spatial synchronization may include angle synchronization which matches an angle of the virtual object with an angle of the real object.

Further, the spatial synchronization may include inverse synchronization which inverts the virtual object on the basis of the real object. For example, in the case where the real object is the hand of the user and a dominant hand of the user is different from that of a person associated with the virtual object, there is a case where inverse synchronization which horizontally inverts the virtual object is effective.

According to such a configuration, the user can visually recognize the virtual object in a state closer to the real object.

Further, in the case where, for example, the display unit 180 is a see-through-type (optically see-through-type) display as will be described later, the display control unit 126 can cause the virtual object and the real object to be displayed in an overlaid (superimposed) manner through the above-described spatial synchronization. According to such a configuration, the user can more easily compare the virtual object with the real object.

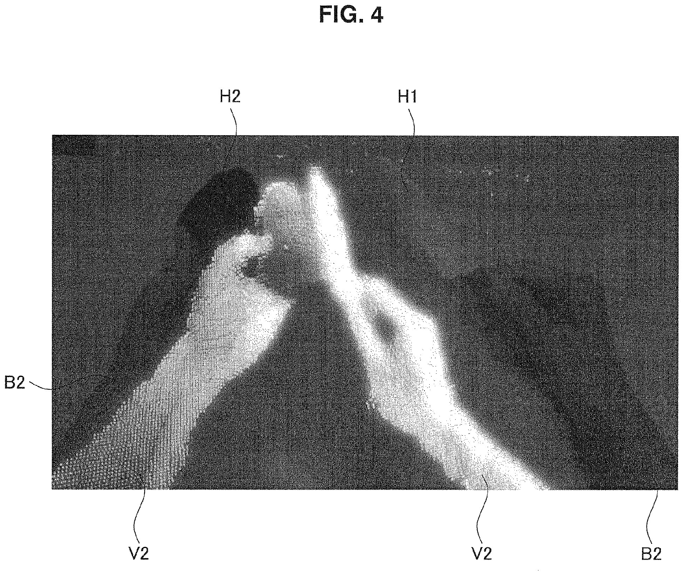

Note that specific examples of display control by the display control unit 126 will be described later with reference to FIGS. 4 to 7 and FIGS. 10 to 14.

The communication unit 140 is a communication interface which mediates communication with other apparatuses. The communication unit 140 supports arbitrary wireless communication protocol or wired communication protocol, and, for example, establishes communication connection with other apparatuses via a communication network which is not illustrated.

The input unit 160 accepts user input and provides the user input to the control unit 120. The input unit 160 may include, for example, a microphone for speech input through speech recognition, a camera for gesture input, or the like, through image recognition, a keyboard for text input, or the like. Note that the configuration of the input unit 160 is not limited to the above-described configuration, and the input method to the display apparatus 10 is not limited to the above-described method.

The display unit 180 is a display which is controlled by the display control unit 126 and which displays various kinds of information. The display unit 180 may be, for example, a see-through-type (optically see-through-type) display. According to such a configuration, the display control unit 126 can control display such that the real object existing in real space and the virtual object are visually recognized by the user at the same time (are included in the field of view of the user at the same time).

FIG. 4 is a conceptual diagram illustrating an example of a field of view of the user who wears the display apparatus 10. As illustrated in FIG. 4, the body B2 of the user and objects H1 and H2 grasped by the user which are real objects and a virtual object V2 are visually recognized by the user at the same time through display control by the display control unit 126.

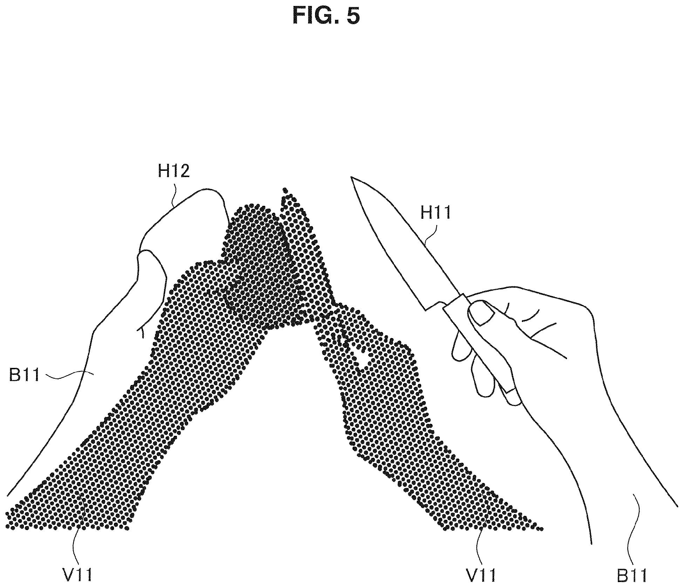

FIG. 5 is a diagram illustrating an example of the field of view of the user illustrated in FIG. 4. The body B11 of the user illustrated in FIG. 5 corresponds to the body B2 of the user illustrated in FIG. 4. Further, objects H11 and H12 illustrated in FIG. 5 correspond to the objects H1 and H2 grasped by the user illustrated in FIG. 4. Further, a virtual object V11 illustrated in FIG. 5 corresponds to the virtual object V2 illustrated in FIG. 4. Further, as illustrated in FIG. 5, the virtual object V11 and the body B2 of the user which is a real object are overlaid and displayed through display control by the display control unit 126.

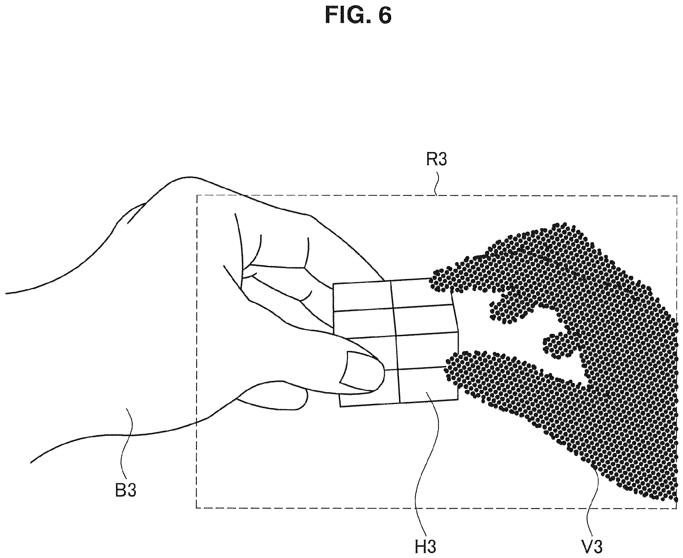

FIG. 6 is a diagram illustrating another example of the field of view of the user who wears the display apparatus 10. As illustrated in FIG. 6, the body B3 of the user and an object H3 grasped by the user which are real objects and a virtual object V3 are visually recognized by the user at the same time through display control by the display control unit 126. Note that, as illustrated in FIG. 5, the virtual object V3 is displayed only within a range of a display region R3. The display region R3 is, for example, a region determined in accordance with design and a configuration associated with the display unit 180.

FIG. 7 is a schematic diagram illustrating another example of the field of view of the user who wears the display apparatus 10. As illustrated in FIG. 7, the body B4 of the user and an object H4 grasped by the user which are real objects and a virtual object V4 are visually recognized by the user at the same time through display control by the display control unit 126. Note that, as in the case with the above example, the virtual object V4 is displayed only within a range of a display region R4. Further, the virtual object V4 can include other object portion V402 as well as a body portion of the user.

### <2-2. Server>

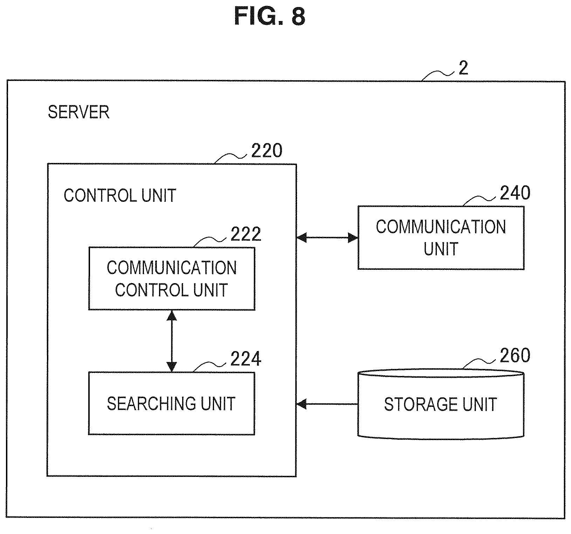

The configuration example of the display apparatus 10 according to the present embodiment has been described above. Subsequently, a configuration example of the server 2 according to the present embodiment will be described. FIG. 8 is a block diagram illustrating the configuration example of the server 2 according to the present embodiment. As illustrated in FIG. 8, the server 2 is an information processing apparatus including a control unit 220, a communication unit 240 and a storage unit 260.

The control unit 220 controls each component of the server 2. Further, as illustrated in FIG. 8, the control unit 220 also functions as a communication control unit 222 and a searching unit 224.

The communication control unit 222 controls communication by the communication unit 240. For example, the communication control unit 222 may control the communication unit 240 to receive a search query including sensed data associated with the real object from the display apparatus 10 and transmit a search result provided from the searching unit 224 which will be described later to the display apparatus 10.

The searching unit 224 searches a database stored in the storage unit 260 on the basis of sensed data associated with the real object at a first time point included in the search query and sensed data associated with the real object at a second time point included in another search query.

Note that search processing by the searching unit 224 can be various kinds of processing in accordance with data included in the search query and the database stored in the storage unit 260. For example, in the case where the sensed data included in the search query and the virtual object included in the database are point cloud data (three-dimensional point group data), the searching unit 224 may perform matching processing of the three-dimensional point group data. Further, in the case where the sensed data included in the search query and the virtual object included in the database are image data, the searching unit 224 may perform matching processing of images.

Further, the searching unit 224 may provide a search result including a top predetermined number of virtual objects with higher scores in search to the communication control unit 222 or may provide a search result including one virtual object with the most superior score in search to the communication control unit 222.

Further, the searching unit 224 may perform search through time-series matching processing between, for example, a sequence of virtual objects included in the database and sensed data associated with a real object included in a plurality of search queries. In such a case, a score in search may be a degree of similarity defined on the basis of an error value in matching processing, and the search result can include a virtual object more similar to the sensed data of the real object included in the search query. As a result, at the display apparatus 10, a current state of the real object (for example, the body of the user) and a virtual object (virtual graphic) at time at which the degree of similarity becomes the highest are displayed in time synchronization with each other.

Further, the searching unit 224 may search the database stored in the storage unit 260 for a virtual object which is likely to be the next motion of the real object on the basis of the search query received from the display apparatus 10. In such a case, a score in search may be a transition probability indicating a probability of transition to a state of the virtual object (for example, the body).

The communication unit 240 is a communication interface which mediates communication with other apparatuses. The communication unit 140 supports arbitrary wireless communication protocol or wired communication protocol and, for example, establishes communication connection with other apparatuses via a communication network which is not illustrated.

The storage unit 260 stores a program and a parameter to be used by each component of the server 2 to function. Further, the storage unit 260 stores a database including data (such as image data, motion data and point cloud data) which has already been recorded.

While the configuration examples of the display apparatus 10 and the server 2 included in the information processing system according to the present embodiment have been described above, the above-described configurations are examples and the present embodiment is not limited to such examples. For example, the display apparatus 10 may have functions of the server 2, and the display apparatus 10 may have functions of the real space sensor 20 and the head tracking sensor 30.

### <<3. Operation example>>

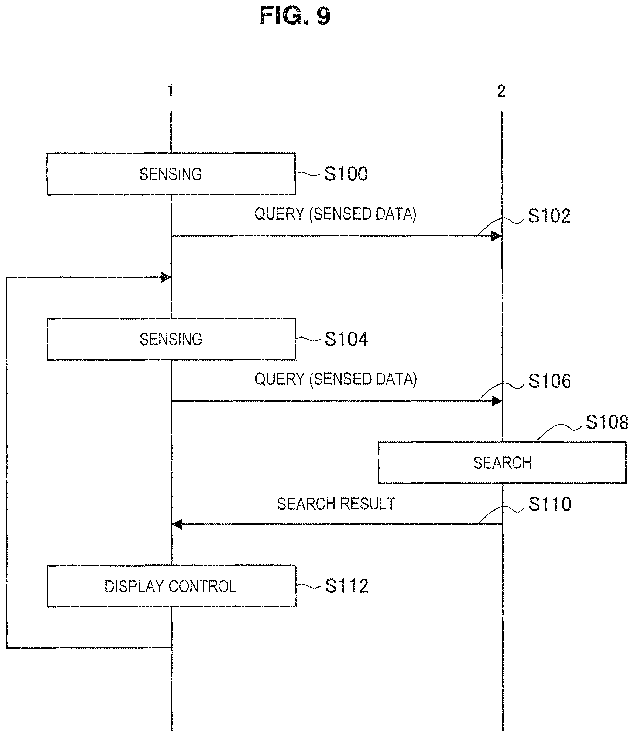

Subsequently, operation of the information processing system according to the present embodiment will be described with reference to FIG. 9. FIG. 9 is a sequence diagram illustrating an operation example of the information processing system according to the present embodiment.

As illustrated in FIG. 9, first, the real space sensor 20 of the display system 1 senses a real object (S100). Sensed data of the real object obtained through sensing in step S100 is included in a search query generated by the display apparatus 10 of the display system 1 and transmitted to the server 2 (S102).

Subsequently, the real space sensor 20 senses a real object again (S104). Sensed data of the real object obtained through sensing in step S104 is included in a search query generated by the display apparatus 10 and transmitted to the server 2 (S106).

Subsequently, the searching unit 224 of the server 2 performs search on the basis of sensed data at a first time point included in the search query received in step S102 and sensed data at a second time point included in the search query received in step S106 (S108). Note that a time point in the above-described step S100 corresponds to the first time point, and a time point in the above-described step S104 corresponds to the second time point.

Subsequently, a search result including a virtual object is transmitted from the server 2 to the display apparatus 10 of the display system 1 (S110). Subsequently, the display control unit 126 of the display apparatus 10 performs display control such that the user can visually recognize the virtual object included in the search result at the same time as the real object (S112). Note that processing of steps S104 to S112 may be sequentially repeated.

### <<4. Specific examples of display control>>

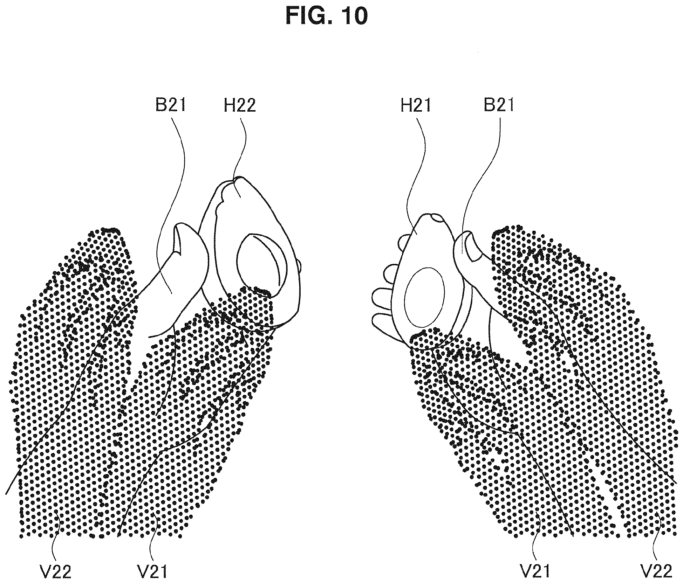

The operation example according to the present embodiment has been described above. Subsequently, specific examples of display control by the display control unit 126 according to the present embodiment will be described. The display control unit 126 according to the present embodiment can perform a wide variety of display control not limited to the examples described with reference to FIGS. 4 to 7. Specific examples of display control by the display control unit 126 according to the present embodiment will be described below with reference to FIGS. 10 to 14.

### (Specific example 1)

The display control unit 126 may cause a plurality of virtual objects obtained through search to be displayed at the same time. Such an example will be described as specific example 1. FIG. 10 is a diagram illustrating an example of a field of view of the user in specific example 1 of display control.

As illustrated in FIG. 10, the body B21 of the user and objects H21 and H22 grasped by the user which are real objects, and a plurality of virtual objects V21 and V22 are visually recognized by the user at the same time through display control by the display control unit 126. The plurality of virtual objects caused to be displayed by the display control unit 126 may be, for example, a top predetermined number of virtual objects with higher scores in search by the server 2. Further, the plurality of virtual objects caused to be displayed by the display control unit 126 may be virtual objects (virtual body display) which are likely to be the next motion of the real object (for example, the body of the user).

According to such a configuration, for example, the user can determine the next motion of the body of the user with reference to a plurality of virtual objects displayed at the same time.

Further, in the example illustrated in FIG. 10, the plurality of virtual objects V21 and V22 can be obtained through search using sensed data of the body B21 of the user and the objects H21 and H22 grasped by the user which are real objects, as queries. Therefore, as illustrated in FIG. 10, the plurality of virtual objects V21 and V22 have respective contours corresponding to contours of the real objects (the body B21 of the user and the objects H21 and H22 grasped by the user). According to such a configuration, for example, the user can easily recognize that the virtual objects are displayed in association with the real objects (for example, the body of the user).

### (Specific example 2)

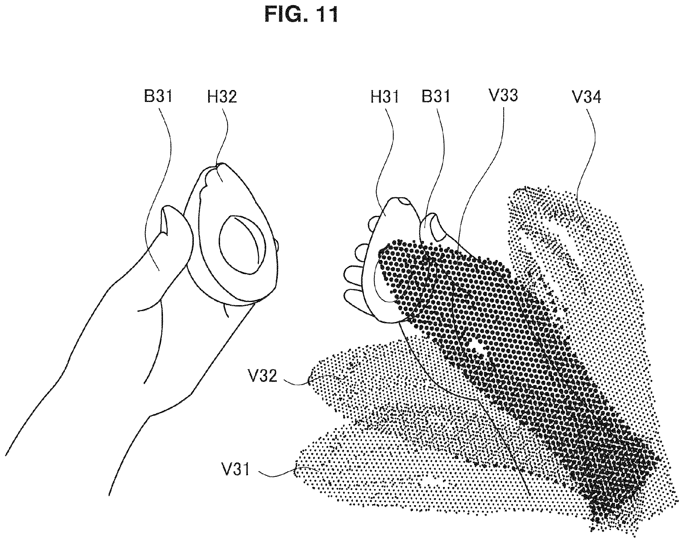

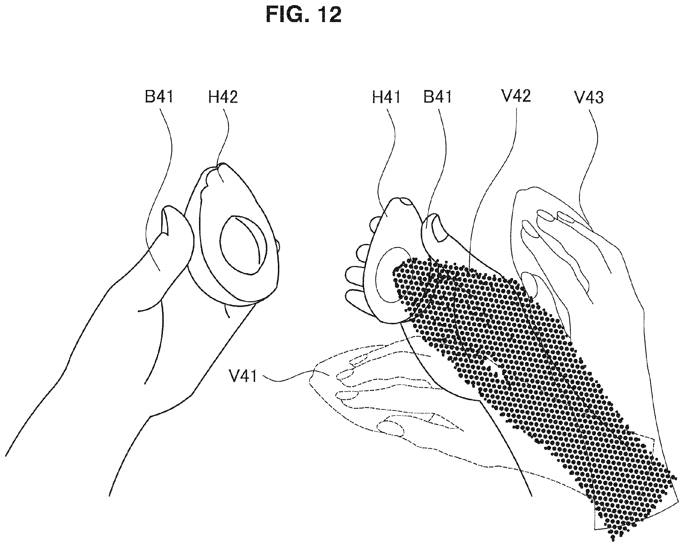

Further, the display control unit 126 may control visibility of the virtual object. Such an example will be described as specific example 2. FIGS. 11 and 12 are diagrams illustrating examples of a field of view of the user in specific example 2 of display control.

As illustrated in FIG. 11, the body B31 of the user and objects H31 and H32 grasped by the user which are real objects, and a plurality of virtual objects V31 to V34 are visually recognized by the user at the same time through display control by the display control unit 126.

Here, it is assumed in the example illustrated in FIG. 11 that a transition probability (an example of a score in search) associated with the virtual object V33 is the highest. As illustrated in FIG. 11, the display control unit 126 may make density (an example of visibility) of the virtual objects V31 to V34 different from each other in accordance with transition probabilities in search. As illustrated in FIG. 11, the virtual object V33 is displayed more darkly than other virtual objects V31, V32 and V33.

As illustrated in FIG. 12, the body B41 of the user and objects H41 and H42 grasped by the user which are real objects, and a plurality of virtual objects V41 to V43 are visually recognized by the user at the same time through display control by the display control unit 126.

Here, it is assumed in the example illustrated in FIG. 12 that a degree of similarity (an example of a score in search) associated with the virtual object V42 is the highest. As illustrated in FIG. 12, the display control unit 126 may make density (an example of visibility) of the virtual objects V41 to V43 different from each other in accordance with scores in search. As illustrated in FIG. 12, the virtual object V42 is displayed more darkly than other virtual objects V41 and V43, and only contours are displayed as the virtual objects V41 and V43.

For example, in the case where degrees of similarity associated with the virtual objects V41 and V43 are further lowered by motion of the body B41 of the user which is a real object, the virtual objects V41 and V43 may disappear.

Note that control of the visibility by the display control unit 126 is not limited to the above-described control of density, and, for example, may include control of color, brightness, permeability, or the like.

Further, while an example has been described in the above description where the display control unit 126 controls the visibility of the virtual objects such that the visibility (for example, density) of virtual objects is higher for higher scores in search, the present embodiment is not limited to such an example.

For example, the display control unit 126 may control the visibility of the virtual objects such that the visibility of the virtual objects is lower for a higher score in search.

For example, in the case where, in causing a virtual object associated with work such as cooking and handicraft, for which procedure is determined in advance, to be displayed, it is estimated that the body moves in accordance with the procedure, the display control unit 126 may lower density of display. For example, the display control unit 126 may lower density of display of the virtual object for a higher degree of similarity (an example of a score in search) associated with the virtual object. According to such a configuration, in the case where the user who sufficiently learns the procedure works, it is possible to prevent work of the user from being inhibited by display of the virtual object.

Further, the display control unit 126 may control the visibility of a virtual object in accordance with positional relationship between the real object and the virtual object in a field of view of the user. For example, the display control unit 126 may lower visibility of a portion which is visually recognized by the user as a portion overlapping with the real object among the virtual object. For example, a portion overlapping (displayed in an overlaid manner) with the arm of the user among the virtual object may be displayed lightly, while a portion which does not overlap with the arm or the body of the user may be displayed darkly.

### (Specific example 3)

Further, the display control unit 126 may cause animation of a time-series sequence of a virtual object (hereinafter, also referred to as a virtual object sequence) to be displayed. Such an example will be described as specific example 3.

The display control unit 126 may control animation display of the virtual object in accordance with sensed data associated with the real object. The virtual object sequence may be, for example, a sequence associated with one step of the procedure determined in advance.

For example, the display control unit 126 may perform predetermined animation display in the case where it is detected that the real object remains stationary on the basis of the sensed data of the real object. For example, if a state where the hand of the user stops is detected in the middle of the procedure, predetermined animation display associated with a virtual object which is likely to be the next motion may be performed.

For example, the predetermined animation display may be slow-motion reproduction display in which the virtual object sequence of the next predetermined period of time is reproduced at constant speed or in slow motion.

Further, the predetermined animation display may be long-period exposure display in which the virtual object sequence of the next predetermined period of time is displayed in an overlaid manner as if exposure were performed for a long period of time (such that a trace remains).

Further, the predetermined animation display may be short interval display in which the virtual object sequence of the next predetermined period of time is displayed at a shorter interval than that in the case where the real object does not remain stationary.

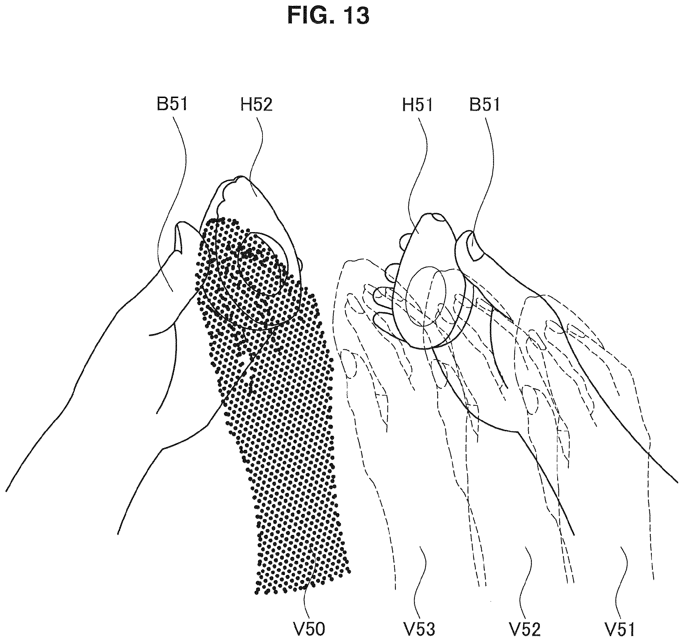

FIG. 13 is a diagram illustrating an example of a field of view of the user in specific example 3 of display control. As illustrated in FIG. 13, the body B51 of the user and objects H51 and H52 grasped by the user which are real objects, and a virtual object V50 at time 0 which is a goal of the procedure are visually recognized by the user at the same time through display control by the display control unit 126. Here, the virtual object V50 is constantly displayed until the body B51 of the user is moved to posture of the virtual object V50.

Further, virtual objects V51 to V53 illustrated in FIG. 13 are respectively virtual objects at time 1 to time 3, and sequentially and repeatedly displayed as animation at time intervals. In the case where the body B51 of the user remains stationary, the virtual objects V51 to V53 are displayed at short intervals, while, in the case where the body B51 of the user does not remain stationary, the virtual objects V51 to V53 are displayed at long intervals.

Note that whether to make reproduction of the virtual object sequence transition to the next step may be judged through comparison with the sensed data associated with a current real object. For example, in the case where the body of the user and an object overlap with point cloud display which stops at a certain state, by an amount equal to or larger than a certain amount, the display control unit 126 may cause the virtual object sequence of the next step to be displayed.

Further, the user can seek the virtual object sequence using the real object (for example, the body of the user). For example, by making the body of the user remain stationary at a certain point (position), the user can seek the virtual object sequence until time at which a virtual object has existed at the point.

### (Specific example 4)

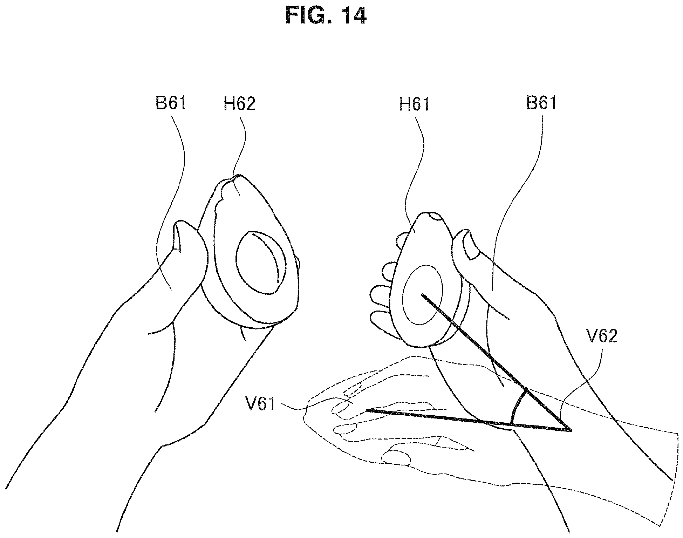

Further, the display control unit 126 may cause an indicator indicating a difference between the virtual object and the sensed data associated with the real object to be displayed. Such an example will be described as specific example 4. FIG. 14 is a diagram illustrating an example of a field of view of the user in specific example 4 of display control.

As illustrated in FIG. 14, the body B61 of the user and objects H61 and H62 grasped by the user which are real objects, and a virtual object V61 are visually recognized by the user at the same time through display control by the display control unit 126. Further, as illustrated in FIG. 14, the display control unit 126 causes an indicator V62 indicating a difference in an angle between sensed data associated with the body B61 of the user and the virtual object V61 to be displayed in an overlaid manner.

Note that the indicator V62 illustrated in FIG. 14 is an example, and the indicator indicating a difference caused to be displayed by the display control unit 126 is not limited to such an example. For example, the display control unit 126 may cause an indicator indicating a difference in a position between the virtual object and the sensed data associated with the real object to be displayed in an overlaid manner.

Further, the indicator caused to be displayed by the display control unit 126 may be number (such as an angle difference and a distance difference) indicating the difference or may be an arrow or the like indicating a direction associated with the difference. Further, the indicator caused to be displayed by the display control unit 126 does not have to be displayed at size of the difference in real space, and, for example, the indicator may be displayed with deformation to make it more understandable by being made larger than the size of the difference in real space.

According to such a configuration, for example, in work (for example, calligraphy) in which motion and an angle of the body are important, it is possible to assist work of the user with higher accuracy.

Note that, in the case where it is known in advance that the motion and the angle of the body are not so important, and the work only requires, for example, knowledge of work procedure, the server 2 may include a virtual object (with a low score) with a large difference with the sensed data of the real object in a search result in search.

### <<5. Modified examples>>

An embodiment of the present disclosure has been described above. Some modified examples of the present embodiment will be described below. Note that respective modified examples described below may be applied to the present embodiment alone or may be applied to the present embodiment in combination with each other. Further, each modified example may be applied in place of the configuration described in the present embodiment or may be applied in addition to the configuration described in the present embodiment.

### (Modified example 1)

While an example has been described in the above description where the sensed data associated with the real object is three-dimensional data including point cloud data, the present technology is not limited to such an example. For example, the sensed data associated with the real object may be a two-dimensional image (a still image or video) or may be motion data such as acceleration data.

In the case where the sensed data associated with the real object is motion data, the server 2 may have a database in which the motion data is associated with the virtual objects, and may search a virtual object on the basis of matching processing between pieces of the motion data.

### (Modified example 2)

Further, while an example has been described in the above description where, if a virtual object is acquired through search based on the sensed data of the real object, the display control unit 126 causes the virtual object to be displayed, the present technology is not limited to such an example. For example, if a virtual object is displayed despite the user's intentions, the display can inhibit work of the user. Therefore, for example, in the case where it is recognized that the user performs gesture of flicking away the virtual object, the display control unit 126 may delete display of the virtual object (point cloud data). Note that, in such a case, the control unit 120 may perform gesture recognition on the basis of the sensed data of the body of the user.

### (Modified example 3)

Further, while an example has been described in the above description where the display apparatus 10 is a see-through-type HMD, the present technology is not limited to such an example. For example, the display apparatus 10 may be a see-through-type head-up display. Further, the display apparatus 10 may be a wide variety of display devices (such as, for example, an HMD, a smartphone and a tablet PC) which can perform video see-through display which displays video of the real object shot with a camera at the same time as a virtual object.

Further, the display system 1 may include a projector as a display unit. In such a case, the display control unit 126 may allow the user to visually recognize a virtual object and a real object at the same time by controlling display of the projector to cause the virtual object to be projected in real space.

Further, the present technology can be also applied to a virtual reality (VR) system in which a virtual object based on a real object (for example, an avatar based on the body of the user) is displayed. In such a case, the virtual object based on the real object and a virtual object searched on the basis of sensed data of the real object are displayed and visually recognized by the user at the same time.

### <<6. Hardware configuration example>>

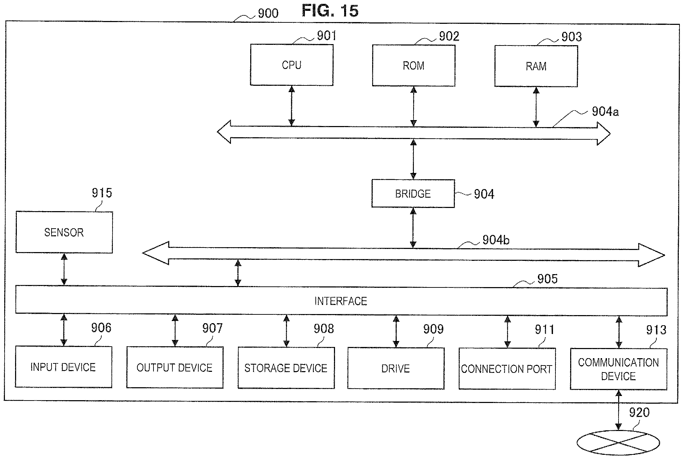

Hereinabove, the embodiments according to the present disclosure have been described. Finally, a hardware configuration of an information processing apparatus according to the present embodiment will be described with reference to FIG. 15. FIG. 15 is a block diagram illustrating an example of the hardware configuration of the information processing apparatus according to the present embodiment. Meanwhile, the information processing apparatus 900 illustrated in FIG. 15 may realize the display apparatus 10 and the server 2, illustrated in FIGS. 3 and 8, respectively, for example. Information processing by the display apparatus 10 and the server 2 according to the present embodiment is realized according to cooperation between software and hardware described below.

As illustrated in FIG. 15, the information processing apparatus 900 includes a central processing unit (CPU) 901, a read only memory (ROM) 902, a random access memory (RAM) 903 and a host bus 904a. In addition, the information processing apparatus 900 includes a bridge 904, an external bus 904b, an interface 905, an input device 906, an output device 907, a storage device 908, a drive 909, a connection port 911, a communication device 913 and a sensor 915. The information processing apparatus 900 may include a processing circuit such as a DSP or an ASIC instead of the CPU 901 or along therewith.

The CPU 901 functions as an arithmetic processing device and a control device and controls the overall operation in the information processing apparatus 900 according to various programs. Further, the CPU 901 may be a microprocessor. The ROM 902 stores programs, operation parameters and the like used by the CPU 901. The RAM 903 temporarily stores programs used in execution of the CPU 901, parameters appropriately changed in the execution, and the like. The CPU 901 may form the control unit 120 illustrated in FIG. 3 or the control unit 220 illustrated in FIG. 8, for example.

The CPU 901, the ROM 902 and the RAM 903 are connected by the host bus 904a including a CPU bus and the like. The host bus 904a is connected with the external bus 904b such as a peripheral component interconnect/interface (PCI) bus via the bridge 904. Further, the host bus 904a, the bridge 904 and the external bus 904b are not necessarily separately configured and such functions may be mounted in a single bus.

The input device 906 is realized by a device through which a user inputs information, such as a mouse, a keyboard, a touch panel, a button, a microphone, a switch, and a lever. In addition, the input device 906 may be a remote control device using infrared ray or other electric waves or external connection equipment such as a cellular phone or a PDA corresponding to operation of the information processing apparatus 900, for example. Furthermore, the input device 906 may include an input control circuit or the like which generates an input signal on the basis of information input by the user using the aforementioned input means and outputs the input signal to the CPU 901, for example. The user of the information processing apparatus 900 may input various types of data or order a processing operation for the information processing apparatus 900 by operating the input device 906. The input device 906 may form the input unit 160 illustrated in FIG. 3, for example.

The output device 907 is formed by a device that may visually or aurally notify the user of acquired information. As such devices, there is a display device such as a CRT display device, a liquid crystal display device, a plasma display device, an EL display device, or a lamp, a sound output device such as a speaker and a headphone, a printer device and the like. The output device 907 outputs results acquired through various processes performed by the information processing apparatus 900, for example. Specifically, the display device visually displays results acquired through various processes performed by the information processing apparatus 900 in various forms such as text, images, tables and graphs. On the other hand, the sound output device converts audio signals including reproduced sound data, audio data and the like into analog signals and aurally outputs the analog signals. The display device 907 may form the display unit 180 illustrated in FIG. 3, for example.

The storage device 908 is a device for data storage, formed as an example of a storage unit of the information processing apparatus 900. For example, the storage device 908 is realized by a magnetic storage device such as an HDD, a semiconductor storage device, an optical storage device, a magneto-optical storage device or the like. The storage device 908 may include a storage medium, a recording device for recording data on the storage medium, a reading device for reading data from the storage medium, a deletion device for deleting data recorded on the storage medium and the like. The storage device 908 stores programs and various types of data executed by the CPU 901, various types of data acquired from the outside and the like. The storage device 908 can form, for example, the storage unit 260 illustrated in FIG. 8.

The drive 909 is a reader/writer for storage media and is included in or externally attached to the information processing apparatus 900. The drive 909 reads information recorded on a removable storage medium such as a magnetic disc, an optical disc, a magneto-optical disc or a semiconductor memory mounted thereon and outputs the information to the RAM 903. In addition, the drive 909 can write information on the removable storage medium.

The connection port 911 is an interface connected with external equipment and is a connector to the external equipment through which data may be transmitted through a universal serial bus (USB) and the like, for example.

The communication device 913 is a communication interface formed by a communication device for connection to a network 920 or the like, for example. The communication device 913 is a communication card or the like for a wired or wireless local area network (LAN), long term evolution (LTE), Bluetooth (registered trademark) or wireless USB (WUSB), for example. In addition, the communication device 913 may be a router for optical communication, a router for asymmetric digital subscriber line (ADSL), various communication modems or the like. For example, the communication device 913 may transmit/receive signals and the like to/from the Internet and other communication apparatuses according to a predetermined protocol, for example, TCP/IP or the like. The communication device 913 can form, for example, the communication unit 140 illustrated in FIG. 2 and the communication unit 240 illustrated in FIG. 8.

Further, the network 920 is a wired or wireless transmission path of information transmitted from devices connected to the network 920. For example, the network 920 may include a public circuit network such as the Internet, a telephone circuit network or a satellite communication network, various local area networks (LANs) including Ethernet (registered trademark), a wide area network (WAN) and the like. In addition, the network 920 may include a dedicated circuit network such as an internet protocol-virtual private network (IP-VPN).

The sensor 915 is various kinds of sensors such as, for example, an acceleration sensor, a gyro sensor, a geomagnetic sensor, an optical sensor, a sound sensor, a distance measuring sensor and a force sensor. The sensor 915 acquires information relating to a state of the information processing apparatus 900 itself such as attitude and moving speed of the information processing apparatus 900 and information relating to a surrounding environment of the information processing apparatus 900 such as brightness and noise around the information processing apparatus 900. Further, the sensor 915 may include a GPS sensor which receives a GPS signal to measure latitude, longitude and altitude of the apparatus.

Hereinbefore, an example of a hardware configuration capable of realizing the functions of the information processing apparatus 900 according to this embodiment is shown. The respective components may be implemented using universal members, or may be implemented by hardware specific to the functions of the respective components. Accordingly, according to a technical level at the time when the embodiments are executed, it is possible to appropriately change hardware configurations to be used.

In addition, a computer program for realizing each of the functions of the information processing apparatus 900 according to the present embodiment as described above may be created, and may be mounted in a PC or the like. Furthermore, a computer-readable recording medium on which such a computer program is stored may be provided. The recording medium is a magnetic disc, an optical disc, a magneto-optical disc, a flash memory, or the like, for example. In addition, the computer program may be delivered through a network, for example, without using the recording medium.

### <<7. Conclusion>>

As described above, according to the embodiment of the present disclosure, it is possible to realize more varieties of display in accordance with real-time variation of a real object. For example, because, in a result of matching with point cloud data on the database, motion of the body of the user varies in real time, it is difficult to respond to the change with static expression. However, according to the embodiment of the present disclosure, it is possible to control, for example, dynamic animation display of a virtual object sequence in accordance with real-time variation of motion of the body of the user.

The preferred embodiment of the present disclosure has been described above with reference to the accompanying drawings, whilst the technical scope of the present disclosure is not limited to the above examples. A person skilled in the art may find various alterations and modifications within the scope of the appended claims, and it should be understood that they will naturally come under the technical scope of the present disclosure.

For example, the steps in the above embodiment may not necessarily be executed in a time-series manner in the order described in the flowcharts. The steps in the processes in the above embodiment may also be executed in, for example, a different order from the order described in the flowcharts, or may be executed in parallel.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   a display control unit configured to control display such that a user is able to visually recognize, at a same time, a real object and a virtual object, the virtual object being obtained through search based on sensed data associated with the real object at a first time point and sensed data associated with the real object at a second time point.
(2) The information processing apparatus according to (1),
   in which the display control unit causes a plurality of the virtual objects obtained through the search to be displayed at a same time.
(3) The information processing apparatus according to (2),
   in which the display control unit causes the plurality of virtual objects each of which has a score superior regarding the search to be displayed at the same time.
(4) The information processing apparatus according to (3),
   in which the score includes a degree of similarity between the sensed data associated with the real object and the virtual object.
(5) The information processing apparatus according to (3),
   in which the score includes a transition probability indicating a probability of transition of the real object to a state of the virtual object.
(6) The information processing apparatus according to any one of (3) to (5),
   in which the display control unit controls visibility of the virtual object in accordance with the score.
(7) The information processing apparatus according to (6),
   in which the display control unit controls the visibility of the virtual object such that the visibility of the virtual object is higher as the score is higher.
(8) The information processing apparatus according to (6),
   in which the display control unit controls the visibility of the virtual object such that the visibility of the virtual object is lower as the score is higher.
(9) The information processing apparatus according to any one of (2) to (8),
   in which the plurality of virtual objects each have a contour corresponding to a contour of the real object.
(10) The information processing apparatus according to any one of (1) to (9),
   in which the display control unit causes the virtual object and the real object to be displayed in an overlaid manner.
(11) The information processing apparatus according to any one of (1) to (10),
   in which the display control unit controls animation display of the virtual object in accordance with the sensed data associated with the real object.
(12) The information processing apparatus according to (11),
   in which the display control unit performs predetermined animation display in a case where it is detected that the real object remains stationary.
(13) The information processing apparatus according to (12),
   in which the predetermined animation display includes at least one of slow-motion reproduction display, long-period exposure display and short-interval display.
(14) The information processing apparatus according to any one of (1) to (13),
   in which the display control unit further causes an indicator indicating a difference between the virtual object and the sensed data associated with the real object to be displayed.
(15) The information processing apparatus according to any one of (1) to (14),
   in which the display control unit causes the virtual object to be displayed with spatial synchronization being achieved with the real object.
(16) The information processing apparatus according to (15),
   in which the spatial synchronization includes at least one of position synchronization, scaling synchronization, angle synchronization and inverse synchronization.
(17) The information processing apparatus according to any one of (1) to (16),
   in which the display control unit controls visibility of the virtual object in accordance with positional relationship between the real object and the virtual object in a field of view of the user.
(18) The information processing apparatus according to any one of (1) to (17),
   in which the sensed data includes three-dimensional data.
(19) An information processing method including:
   controlling display by a processor such that a user is able to visually recognize, at a same time, a real object and a virtual object, the virtual object being obtained through search based on sensed data associated with the real object at a first time point and sensed data associated with the real object at a second time point.
(20) A program causing a computer to realize a function of controlling display such that a user is able to visually recognize, at a same time, a real object and a virtual object, the virtual object being obtained through search based on sensed data associated with the real object at a first time point and sensed data associated with the real object at a second time point.

### Reference Signs List

- 1: display system
- 2: server
- 10: display apparatus
- 20: real space sensor
- 30: head tracking sensor
- 120: control unit
- 122: communication control unit
- 124: query generating unit
- 126: display control unit
- 140: communication unit
- 160: input unit
- 180: display unit
- 220: control unit
- 222: communication control unit
- 224: searching unit
- 240: communication unit
- 260: storage unit

## Claims

1. An information processing apparatus comprising:
a display control unit configured to control display such that a user is able to visually recognize, at a same time, a real object and a virtual object, the virtual object being obtained through search based on sensed data associated with the real object at a first time point and sensed data associated with the real object at a second time point.

2. The information processing apparatus according to claim 1,
wherein the display control unit causes a plurality of the virtual objects obtained through the search to be displayed at a same time.

3. The information processing apparatus according to claim 2,
wherein the display control unit causes the plurality of virtual objects each of which has a score superior regarding the search to be displayed at the same time.

4. The information processing apparatus according to claim 3,
wherein the score includes a degree of similarity between the sensed data associated with the real object and the virtual object.

5. The information processing apparatus according to claim 3,
wherein the score includes a transition probability indicating a probability of transition of the real object to a state of the virtual object.

6. The information processing apparatus according to claim 3,
wherein the display control unit controls visibility of the virtual object in accordance with the score.

7. The information processing apparatus according to claim 6,
wherein the display control unit controls the visibility of the virtual object such that the visibility of the virtual object is higher as the score is higher.

8. The information processing apparatus according to claim 6,
wherein the display control unit controls the visibility of the virtual object such that the visibility of the virtual object is lower as the score is higher.

9. The information processing apparatus according to claim 2,
wherein the plurality of virtual objects each have a contour corresponding to a contour of the real object.

10. The information processing apparatus according to claim 1,
wherein the display control unit causes the virtual object and the real object to be displayed in an overlaid manner.

11. The information processing apparatus according to claim 1,
wherein the display control unit controls animation display of the virtual object in accordance with the sensed data associated with the real object.

12. The information processing apparatus according to claim 11,
wherein the display control unit performs predetermined animation display in a case where it is detected that the real object remains stationary.

13. The information processing apparatus according to claim 12,
wherein the predetermined animation display includes at least one of slow-motion reproduction display, long-period exposure display and short-interval display.

14. The information processing apparatus according to claim 1,
wherein the display control unit further causes an indicator indicating a difference between the virtual object and the sensed data associated with the real object to be displayed.

15. The information processing apparatus according to claim 1,
wherein the display control unit causes the virtual object to be displayed with spatial synchronization being achieved with the real object.

16. The information processing apparatus according to claim 15,
wherein the spatial synchronization includes at least one of position synchronization, scaling synchronization, angle synchronization and inverse synchronization.

17. The information processing apparatus according to claim 1,
wherein the display control unit controls visibility of the virtual object in accordance with positional relationship between the real object and the virtual object in a field of view of the user.

18. The information processing apparatus according to claim 1,
wherein the sensed data includes three-dimensional data.

19. An information processing method comprising:
controlling display by a processor such that a user is able to visually recognize, at a same time, a real object and a virtual object, the virtual object being obtained through search based on sensed data associated with the real object at a first time point and sensed data associated with the real object at a second time point.

20. A program causing a computer to realize a function of controlling display such that a user is able to visually recognize, at a same time, a real object and a virtual object, the virtual object being obtained through search based on sensed data associated with the real object at a first time point and sensed data associated with the real object at a second time point.
